(19) Europäisches Patentamt
European Patent Office
Office européen des brevets

(11) **EP 2 520 838 A2**

(12) **EUROPEAN PATENT APPLICATION**
published in accordance with Art. 153(4) EPC

(43) Date of publication:
**07.11.2012 Bulletin 2012/45**

(51) Int Cl.:
***F16K 31/04*** *(2006.01)*   ***F01N 5/04*** *(2006.01)*
***F16K 31/54*** *(2006.01)*   ***H05K 7/10*** *(2006.01)*

(21) Application number: **10841290.9**

(22) Date of filing: **29.12.2010**

(86) International application number:
**PCT/KR2010/009518**

(87) International publication number:
**WO 2011/081458 (07.07.2011 Gazette 2011/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2009 KR 20090132847**

(71) Applicant: **Kamtec Inc.**
**Jincheon-gun, Chungbuk 365-822 (KR)**

(72) Inventors:
  • **LIM, Chang Sik**
    **Jincheon-gun**
    **Chungbuk 365-822 (KR)**
  • **JUNG, Ki Ho**
    **Jincheon-gun**
    **Chungbuk 365-822 (KR)**

  • **JANG, Yong Soo**
    **Jincheon-gun**
    **Chungbuk 365-822 (KR)**
  • **CHOI, In Suk**
    **Jincheon-gun**
    **Chungbuk 365-822 (KR)**
  • **CHOI, Dong Wook**
    **Jincheon-gun**
    **Chungbuk 365-822 (KR)**

(74) Representative: **Thinat, Michel**
    **Cabinet Weinstein**
    **56 A, rue du Faubourg Saint-Honoré**
    **75008 Paris (FR)**

(54) **VEHICLE ACTUATOR**

(57)    An actuator for a vehicle capable of selectively opening and closing a waste gate valve provided in a turbocharger is disclosed. The actuator includes a driving motor having a motor shaft, a gear assembly comprising a plurality of gears engaging with each other and with the motor shaft, a connecting unit connected with the gear assembly to move along the operation of the gear assembly, wherein the connecting unit is connected with a waste gate valve provided in a turbocharger housing.

FIG. 2

**EP 2 520 838 A2**

**Description**

## TECHNICAL FIELD

Embodiments may relate to an actuator for a vehicle that can selectively open and close a waste gate valve provided in a turbocharger.

## BACKGROUND

Recently, a turbocharger has been mounted in a vehicle for Exhaust Gas Regulation reinforcement, carbon dioxide reduction and vehicle output improvement.

The turbocharger may rotate a turbine after receiving exhaust gas and it may rotate a compressor connected with the turbine via a single shaft to supply fresh air to an engine.

A waste gate valve is provided in the turbocharger to control the amount of exhaust gas supplied to the turbine and the amount of the exhaust gas exhausted to a muffler.

A conventional waste gate valve is an air pressure type and the waste gate valve is driven by using a diaphragm.

However, if the air pressure type driving source is used to drive the waste gate valve, an air pressure generation time taken to drive the valve may be required. Also, there may be a disadvantage of failure in operating the waste gate valve during the air pressure generation time.

In addition, if the waste gate valve is operated based on the air pressure type, the waste gate valve may be driven based on a vacuum or static pressure method. Because of that, responsibility might deteriorate noticeably and necessity of an electronic actuator the waste gate valve has been rising.

## DISCLOSURE

## TECHNICAL PROBLEM

To solve the problems, an object of the embodiments is to provide an actuator for a vehicle that can improve responsibility and can provide a driving force to a waste gate valve stably, regardless of a changed pressure of exhaust gas.

## TECHNICAL SOLUTION

To achieve these objects and other advantages and in accordance with the purpose of the embodiments, as embodied and broadly described herein, an actuator for a vehicle includes a driving motor comprising a motor shaft; a gear assembly comprising a plurality of gears engaging with each other and with the motor shaft; and a connecting unit connected with the gear assembly to move along the operation of the gear assembly, wherein the connecting unit is connected with a waste gate valve provided in a turbocharger housing.

The actuator for the vehicle may further include a housing unit to hold the driving motor and the gear assembly; a cover member arranged in the housing unit, to cover the gear assembly, wherein a shaft provided in one of the gears composing the gear assembly is projected outside, passing through the cover member, to be coupled to the connecting unit.

The connecting unit may include a first connecting member coupled to a shaft of the gear to move along the rotation of the gear; a second connecting member comprising an end rotatably connected with the first connecting member and the other end connected with the waste gate valve; and an intermediate connecting member provided between the first connecting member and the second connecting member, to rotatably connect the first and second connecting members with each other.

The first connecting member may include a shaft hole formed in a non-circular shape, to insert the shaft of the gear therein; and an inserting hole to fixedly insert the intermediate connecting member therein.

The intermediate connecting member may include a ball-joint area coupled to the second connecting member to couple the second connecting member rotatably along a back and forth direction and a right and left direction.

The intermediate connecting member has a cross sectional diameter that is smaller than a diameter of a coupling hole provided in the second connecting member, to enable the second connecting member to be rotatable along back/forth and right/left directions.

The gear assembly may include a first gear to engage with a spur gear provided in the motor shaft; a second gear to engage with the first gear; and a third gear to engage with the second gear, the third gear comprising a shaft coupled to the connecting unit.

The first gear, the second gear and the third gear may be arranged to enable a virtual line connecting centers of the first gear, the second gear and the third gear to form a triangle.

The first gear and the second gear may be multi-layered gears having different outer diameters, respectively.

The third gear may have a teeth form formed in a predetermined area of an outer circumferential surface thereof, and a magnet may be arranged in the other area having no teeth form. A sensor may be provided in the housing unit to detect an electromagnetic flux density of the magnet.

The actuator for the vehicle may further include a heat emission part provided in the housing unit to cut off heat transmission performed by exhaust gas.

The actuator for the vehicle may further include a control unit to control the driving motor, wherein the control unit controls a position of the first connecting member to make an arrangement angle of the first connecting member be a preset angle or less with respect to a virtual perpendicular line, to prevent the value from being open by the pressure of exhaust gas flowing the waste gate, when embodying a closed status of the waste gate by using the valve.

The control unit may control the arrangement angle of the first connecting member to have a value in a range of 1° ~ 40°, when the waste gate is closed by the valve.

A resistance of the valve resisting against the pressure of exhaust gas may be increased as an arrangement angle of the first and second connecting members is getting smaller, when a predetermined quantity of electric currents are applied to the driving motor.

The area of the first connecting member coupled to the shaft of the gear may be arranged upper than the area thereof connected with the second connecting member, and the area of the second connecting member coupled with the first connecting member may be arranged upper than the area thereof coupled to the valve.

## ADVANTAGEOUS EFFECTS

The embodiments have following advantageous effects. As mentioned above, the actuator for the vehicle may be driven electronically and responsibility for the motor driving may be enhanced advantageously.

Furthermore, the actuator for the vehicle according to the present invention may advantageously transfer the driving force to the connecting members connected with the waste gate valve stably, regardless of change of the exhaust gas pressure.

Especially, the arrangement angle of the connecting unit coupled to the gear assembly connected with the driving motor may have a value in a preset range. In this case, a large force may be provided to the connecting members connected with the waste gate valve even by a lower motor torque. Because of that, the closed status of the waste gate valve may be maintained smoothly.

Even when the pressure of exhaust gas drawn into the turbocharger is high, the closed status of the waste gate valve may be maintained smoothly.

In the meanwhile, the actuator for the vehicle may enable the gears arranged with minimized sizes and it may increase the driving force. Because of that, compact sized products may be enabled and productivity thereof may be improved advantageously.

The actuator for the vehicle according to the present invention may control an opened and closed degree of the waste gate valve smoothly. Because of that, stable vehicle driving may be enabled advantageously.

## BRIEF DESCRIPTION OF THE DRAWINGS

Arrangements and embodiments may be described in detail with reference to the following drawings in which like reference numerals refer to like elements and wherein:

FIG. 1 is a schematic view illustrating a turbocharger that uses an actuator according to the present invention;

FIG. 2 is an exploded perspective view illustrating the actuator according to the present invention;

FIG. 3 is a perspective view illustrating the actuator according to the present invention;

FIG. 4 is a side sectional view illustrating connection between the actuator according to the present invention connected and a connecting unit;

FIG. 5 is a side sectional view illustrating the actuator according to the present invention;

FIG. 6 illustrates a connecting unit according to a first embodiment;

FIG. 7 illustrates a connecting unit according to a second embodiment;

FIG. 8 illustrates a connecting unit according to a third embodiment;

FIG. 9 is a side sectional view illustrating operation of the connecting unit according to the first to third embodiments;

FIG. 10 is a front view illustrating a coupling state of a gear assembly according to the present invention;

FIG. 11 is a front view illustrating a structure of a center of a gear assembly according to the present invention;

FIG. 12 is a front view illustrating another embodiment of the gear assembly according to the present invention;

FIG. 13 is a front view illustrating an arrangement angle of a first connecting member according to the present invention;

FIG. 14 is a diagram illustrating an operation state of a waste gate valve based on change of the arrangement angle of the first connecting member;

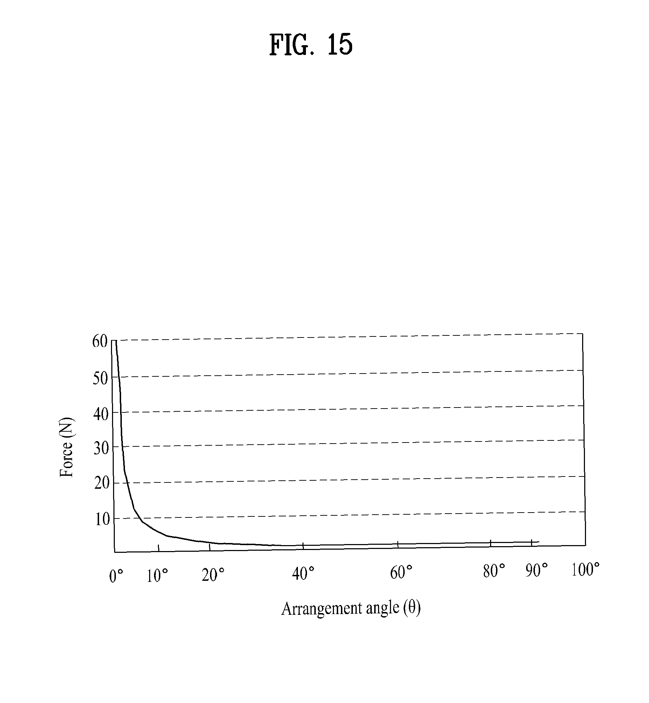

FIG. 15 is a diagram illustrating change of a resistance based on the change of the arrangement angle of the first connecting member;

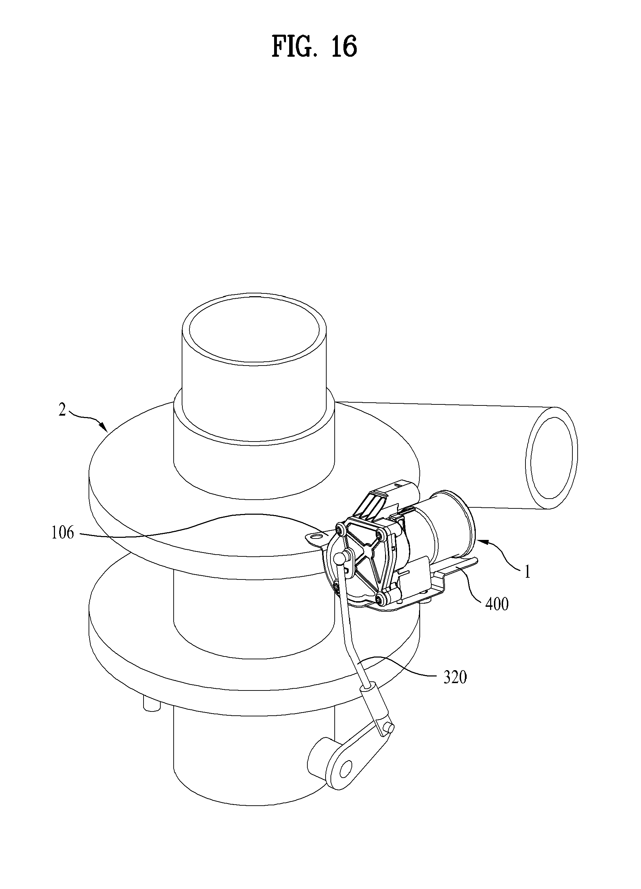

FIG. 16 is a perspective view illustrating the actuator according to the present invention that is mounted to a vehicle;

FIG. 17 is a block view illustrating control of the actuator according to the present invention;

FIG. 18 is a graph illustrating relation among a magnetic flux density, an open and closed degree and an arrangement angle; and

FIG. 19 is a graph illustrating change of the open and closed degree based on the arrangement angle.

## BEST MODE

As follows, embodiments will be described in detail to be embodied by those skilled in the art to which the embodiments pertain to, in reference to the accompanying drawings.

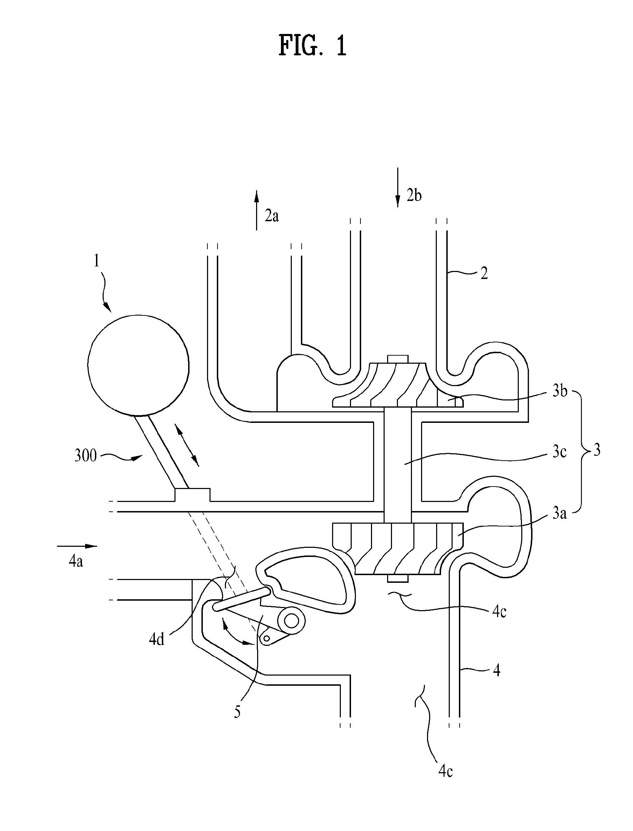

As shown in FIG. 1, an actuator 1 according to an embodiment may include a fresh air passage housing 2 to provide fresh air to a turbocharger housing, an exhaust gas passage housing 4 to flow exhausted gas therein and a turbine assembly 3 provided in each of the fresh air passage housing 2 and the exhaust gas passage housing 4.

The turbine assembly 3 may include an exhaust gas turbine 3a rotatably provided in the exhaust gas passage housing 4, a fresh air supply turbine 3b rotatably provided in the fresh air passage housing 2 and a connecting shaft 3c to connect the exhaust gas turbine 3a and the fresh air supply turbine 3b with each other.

An inlet 2b and an outlet 2a may be provided in the fresh air passage housing 2. The fresh air supply turbine 3b may be provided between the inlet 2b and the outlet 2a.

In the meanwhile, an inlet 4a and an outlet 4b may be provided in the exhaust gas passage housing 4. Also, in the exhaust gas passage housing 4 may be provided a main passage 4c to form a predetermined space where the exhaust gas turbine 3a is installed and a bypass passage 4d partitioned off from the main passage 4c.

The waste gate valve (hereinafter, referenced to as 'the valve') 5 may be provided in the bypass passage 4d and it may selectively open and close the bypass passage 4d.

When exhaust gas is drawn into the inlet 4a of the exhaust gas passage housing 4, the exhaust gas may pass the main passage 4c and it may rotate the exhaust gas turbine 3a, only to rotate the fresh air supply turbine 3b.

The rotation of the fresh air supply turbine 3b may flow fresh air into the inlet 2a of the fresh air passage housing 2 and the drawn fresh air may pass the fresh air supply turbine 3b, to be exhausted via the outlet 2b.

In the meanwhile, when the exhaust gas is drawn into the exhaust gas passage housing 4, the pressure of exhaust gas may press the valve 5 and a direction of the pressure may be toward a direction to open the valve 5.

The valve 5 has to maintain a constant closed status to maintain the closed status of the bypass passage 4d. Because of that, a resistance has to be provided in an opposite to the direction of the pressure applied by the exhaust gas.

Such a resistance may be provided by the actuator 1 connected to a connection unit 300 coupled with the valve 5.

The actuator 1 may be an electric driven type actuator 1 that is driven by an electric power supplied from outside, not an air pressure type.

Also, the force provided to the valve 5 may be reduced in a high load region with a high RPM of an engine (approximately 1600RPM or more), to maintain the open status of the valve 5.

As the exhaust gas is increased in the high load region, the exhaust gas has to be partially guided to the bypass passage 4d.

If the exhaust gas is increased, the pressure may be increased as much as the rotational number of the exhaust gas turbine 3a may be increased. Because of that, the rotational number of the fresh air turbine 3b may be increased and the supply of the fresh air may be increased accordingly.

If the supply of fresh air is increased too much, an air fuel ratio will be increased too much. To prevent such a problem, an open/closed status of the valve 5 may be adjusted to enable the exhaust gas to pass the bypass passage 4d.

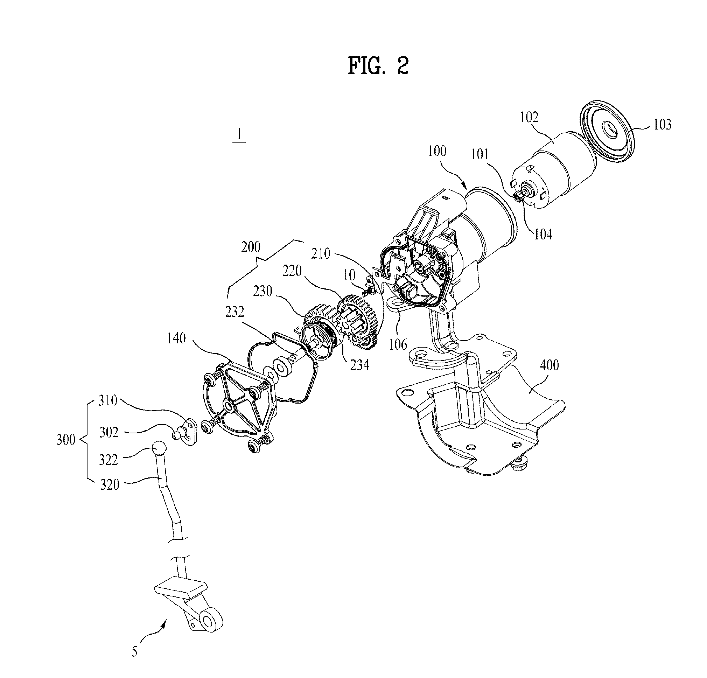

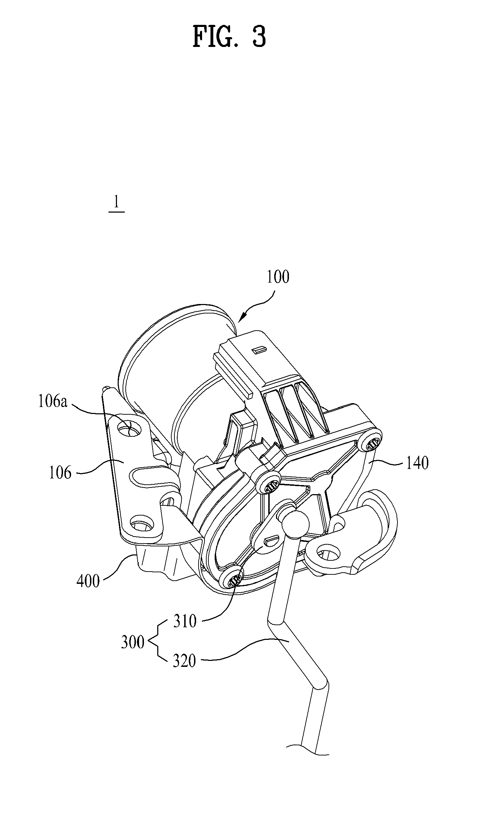

As shown in FIGS. 2 and 3, the actuator 1 may include a housing unit 100 to form an exterior appearance thereof and a driving motor 102 mounted in the housing unit 100.

A connector may be provided in the housing unit 100 to supply an electric power to the driving motor 102 and a heat radiator 400 may be provided in the housing unit 100 to prevent a malfunction of the driving motor 102.

The heat radiator 400 may be arranged between the housing unit 100 and the turbocharger when the actuator 1 is installed to the turbocharger.

Here, the position of the heat radiator 400 may not be limited thereby and any positions may be allowable only if they are located between the turbocharger employed as a heat source and the actuator.

The high temperature exhaust gas may be drawn into the turbocharger and the surface temperature of the turbocharger may be increased. The heat radiator 400 may prevent the surface heat of the turbocharger from transfering to the housing unit 100.

Because of that, the malfunction of the driving motor 102 caused by the high temperature heat may be prevented.

In the meanwhile, a mounding bracket 106 may be provided in the housing unit 100 to be coupled to the turbocharger. A plurality of bolting holes 106a may be provided in the mounting bracket 106.

Alternatively, the housing unit 100 may be directly coupled to the turbocharger, without the mounting bracket 106.

The housing unit may have opened front and back surfaces. A motor cap 103 may be provided in the back surface of the housing unit 100 to support a back surface of the driving motor 102 and a cover 140 may be coupled to the opened front surface of the housing unit 100.

A motor shaft 101 may be provided in the driving motor 102 and a spur gear 104 may be provided at an end of the motor shaft 101.

The spur gear 104 may engage with a first gear 210 provided in a gear assembly 200.

The first gear 210 may engage with a second gear 220 adjacent to the first gear 210 and the second gear 220 may engage with a third gear 230.

A tooth form may be provided along each outer circumferential surface of the first and second gears 210 and 220 that are formed in a multi-layered gear type. The third gear 230 may have a tooth form formed along a predetermined area of an outer circumferential surface thereof.

The reason why the tooth form is provided in the predetermined area of the outer circumferential surface of the third gear 230 is that the third gear 230 is designed to be corresponding to a limited range of an opened or closed section as an operational range of the valve 5.

As a result, the tooth form may not be provided in an entire area but in a predetermined area of the outer circumferential surface of the third gear 230.

A magnet 234 may be provided in the third gear 230 to recognize a precise position of the third gear 230 changed by the rotation. A sensor 10 may be arranged adjacent to the magnet 234 to detect an electromagnetic flux density of the magnet 23.

The sensor 10 may be a hall sensor.

The magnet 234 arranged in the third gear 230 may be limitedly arranged in a predetermined area of the circumferential surface of the third gear 230. According to the embodiment, the magnet 234 may be arranged to have an arc profile and it may have N-pole and S-pole facing each other.

A shaft 232 may be inserted in the third gear 230 to transfer a final driving force of the gear assembly 200 to the connecting unit 300 which will be described later.

In the meanwhile, a sealing member may be provided between the housing unit 100 and the cover 140 coupled to the housing unit 100.

The shaft 232 may be projected outside the cover 140, passing the cover 140, and the connecting unit 300 may be connected with an end of the shaft 232 to transfer a rotational force of the shaft 232 to the valve 5.

The connecting unit 300 may include a first connecting member 310 coupled to the shaft 232, formed in a plate bracket shape, an intermediate connecting member 302 coupled to the first connecting member 301 and a second connecting member 320 rotatably coupled to the intermediate connecting member 302 to transfer the force to the valve 5.

An receiving part 322 may be provided at an upper end of the second connecting part 322 to rotatably to receive the intermediate connecting member 302 which is inserted into the receiving part. An end of the intermediate connecting member 302 may be ball-joint shaped or universal-joint shaped.

As a result, the second connecting member 320 may be rotatable along a right and left direction and a back and forth direction with respect to the coupling point with the intermediate connecting member 302.

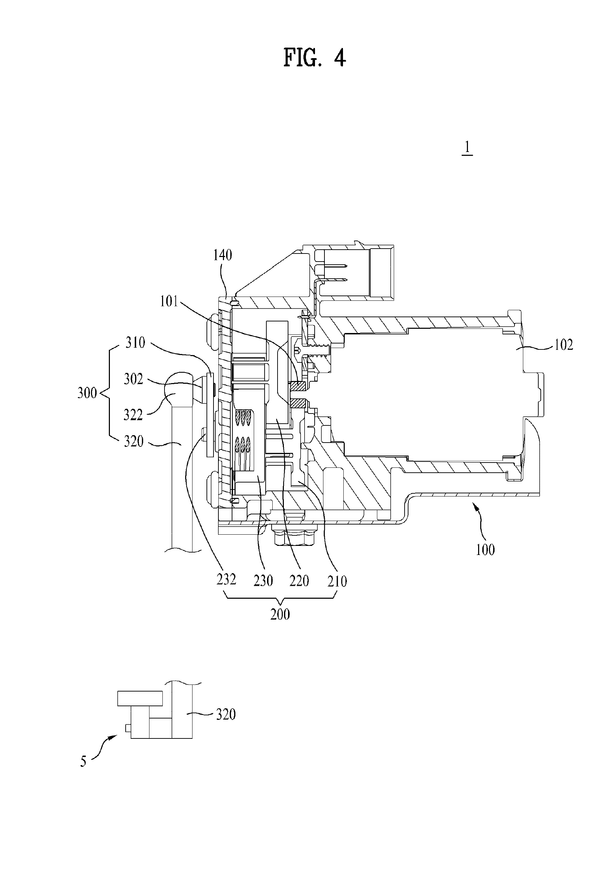

As shown in FIG. 4, the motor shaft 101 may be provided in the driving motor 102 and the spur gear 104 coupled to the shaft 101 may engage with the first gear 210.

The first gear 210 may engage with the neighboring second gear 220 and the second gear 220 may engage with the third gear 230.

The shaft 232 passing through the center of the third gear 230 may be connected with the connecting unit 300 via the cover 140 as mentioned above.

The connecting relation mentioned above may enable the driving force of the driving motor 102 to be transferred to the valve 5 finally, only to adjust the opening and closing operation of the valve 5.

The first gear 210 and the second gear 220 may be multi-layered gear types. Although shown in the drawings, they are configured of a double-layered gear and the embodiment is not limited thereby.

A predetermined area possessed by each of the first and second gears 21 and 220 that has a large diameter may be referenced to as a first layer and another predetermined area that has a small diameter may be referenced to as a second layer.

In this case, the spur gear 104 may engage with the first layer of the first gear 210 and the second layer of the first gear 210 may engage with the third layer of the second gear 220.

Also, the second layer of the second gear 220 may engage with the third gear 230.

In the meanwhile, the cover 140 provided between the gear assembly 200 may bolting-coupled to the housing unit 100.

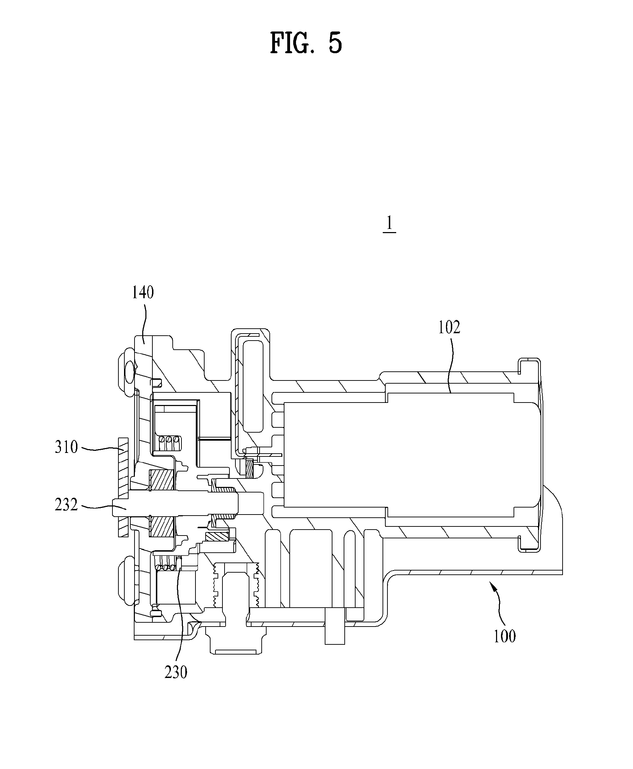

As shown in FIG. 5, the shaft 232 fixedly coupled to the third gear 230 may pass through the cover 140 and it may be projected outside the cover 140. Here, the projected shaft 232 may be fixedly coupled to the first connecting member 310.

As a result, the first connecting member 310 may be rotated along a rotational direction of the third gear 230.

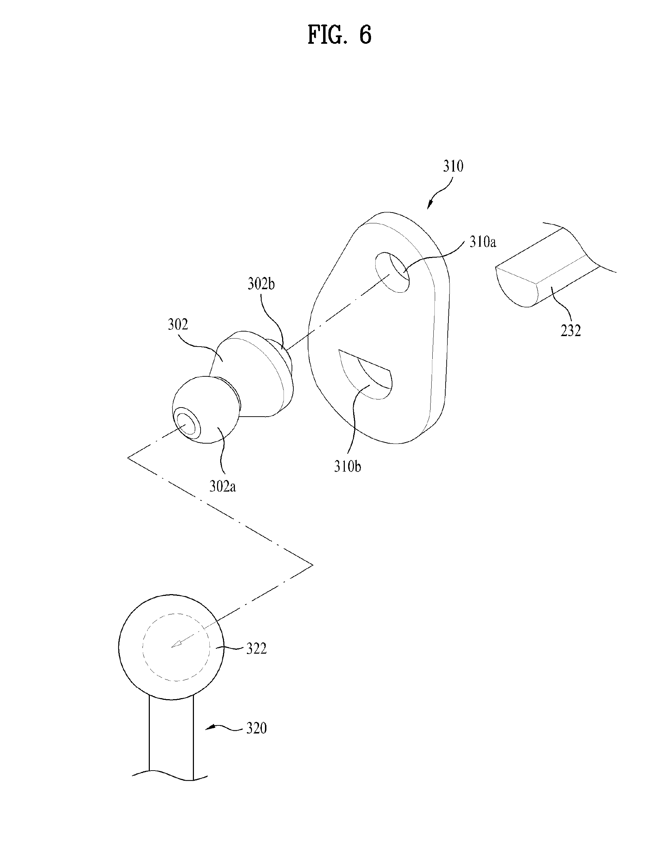

FIG. 6 illustrates a connection relation among the first connecting member 310, the intermediate connecting member 302 and the second connecting member 320.

The shaft 232 may be connected with the first connecting member 310. For that connecting, a shaft hole 310b may be provided in the first connecting member 310. In other words, the shaft 232 may be fixedly inserted in the shaft hole 310b.

To transfer the rotational movement of the shaft 232 to the first connecting member 310 properly, a cross section of the shaft 232 and a profile of the shaft hole 310b may be non-circular, for example, hemispherical or partially-cut-away circle shaped.

If the cross section of the shaft 232 and the profile of the shaft hole 310b are circular, a SLIP state might be generated between internal surfaces of the shaft 232 and the shaft hole 310b. Because of the SLIP state, the rotational movement of the shaft 232 might not be transferred to the first connecting member 310 appropriately.

In the meanwhile, the first connecting shaft 310 may include an inserting hole 310a spaced apart a predetermined distance from the shaft hole 310b.

An end of the intermediate connecting member 302 may be fixedly inserted in the inserting hole 310a.

The intermediate connecting member 302 may include a head part 302a formed in a ball shape and a coupling part 302b provided in opposite to the head part 302a, with being projected to be inserted in the inserting hole 310a.

The coupling part 302b may be fixed after inserted in the inserting hole 310a. Because of that, the intermediate connecting member 302 may be moved along a rotational locus of the first connecting member 310 when the first connecting member 310 is rotated.

The head part 302a may be provided in a spherical shape and it may be inserted and received in a receiving part 322 provided in an upper end of the second connecting member 320. By this connecting between the second connecting member 320 and the head part 302a, the second connecting member 320 may perform a rotational movement with respect to the head part 302a.

The rotational movement may include rightward/leftward rotation and backward/forward rotation. The rotational movement of the shaft 232 may be converted into the upward/downward opening/closing movement of the valve (5, see FIG. 1), because the rightward/leftward rotation and the backward/forward rotation is possible.

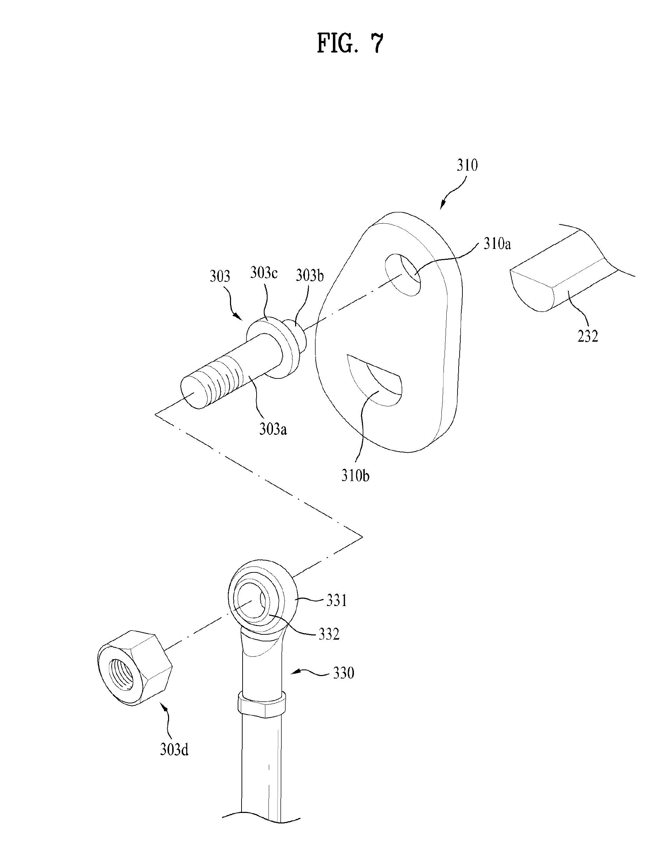

FIG. 7 illustrates another embodiment of the connecting relation among the first connecting member 310, the intermediate connecting member 303 and the second connecting member 330.

The structure and the connecting relation between the shaft 232 and the first connecting member 310 are identical to the structure and the connecting relation described in reference to FIG. 6, and detailed descriptions thereof will be omitted accordingly.

Here, a shape of the intermediate connecting member 303 is different from the intermediate connecting member 302 disclosed in FIG. 6. The intermediate connecting member 303 may be fixedly coupled to the shaft hole 310a provided in the first connecting member 310.

In the meanwhile, a second connecting member 330 connected with the intermediate connecting member 303 may be different from the second connecting member 320 disclosed in FIG. 6.

In other words, a bearing 332 may be provided in an receiving part 331 provided in an upper end of the second connecting member 330 to guide the rotational movement of the second connecting member 330. The intermediate connecting member 303 may be inserted and received in the bearing 332.

The intermediate connecting member 303 may include a first coupling part 303a inserted and received in the bearing 332, a second coupling part 303b inserted in the shaft hole 310b and a supporting plate 303c provided between the first and second coupling parts 303a and 303b to be supported in surface-contact with a rim of the shaft hole 310a.

A screw thread may be formed at an end of the first coupling part 303a and a lock nut 303d may be coupled to the screw thread, to prevent the intermediate connecting member 303 and the second connecting member 330 from separating from each other.

The bearing 332 may be rotatably provided in the receiving part 331 of the second connecting member 330 and it may be rotatable along a back and forth direction and a right and left direction.

When the intermediate connecting member 303 is coupled to the bearing 332, the second connecting member 330 may be rotatable on an axis of the intermediate connecting member 303 along the back and forth direction and the right and left direction.

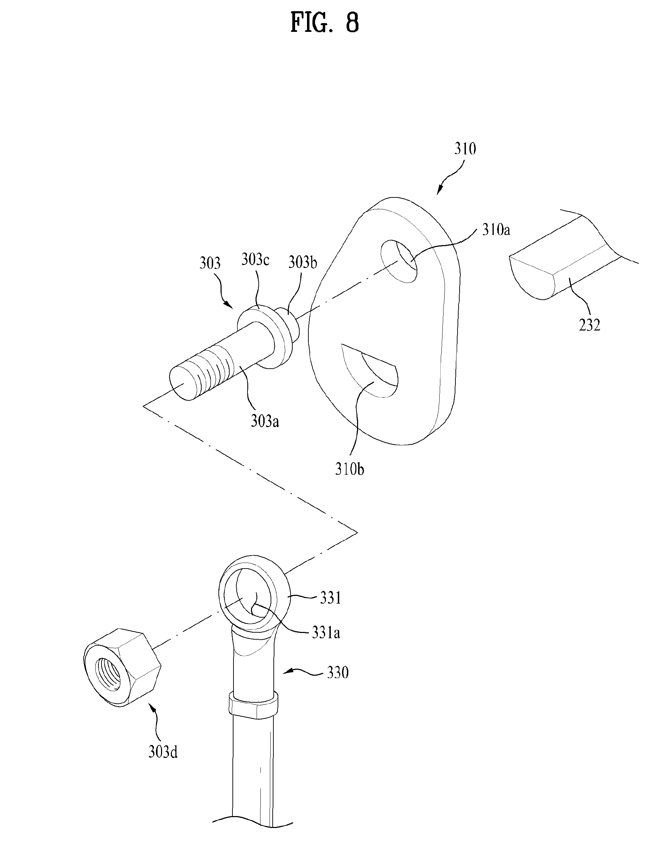

FIG. 8 illustrates another embodiment different from the embodiment shown in FIG. 7.

A different feature from the embodiment shown in FIG. 7 is that the intermediate connecting member 303 is directly inserted in the receiving part 331, without bearing 332 shown in FIG. 7.

An inner diameter of an receiving hole 331a formed in the receiving part 331 may be larger than a diameter of the first coupling part 303a of the second connecting member 303.

As a result, while performing a rightward and leftward rotation freely, in a state of being connected with the intermediate connecting member 303, the second connecting member 303 may perform a backward and forward rotation limitedly.

The other configurations of the embodiment shown in FIG. 8 may be identical to those of the embodiment shown in FIG. 7, except that no bearing 332 is provided, and detailed descriptions thereof will be omitted accordingly.

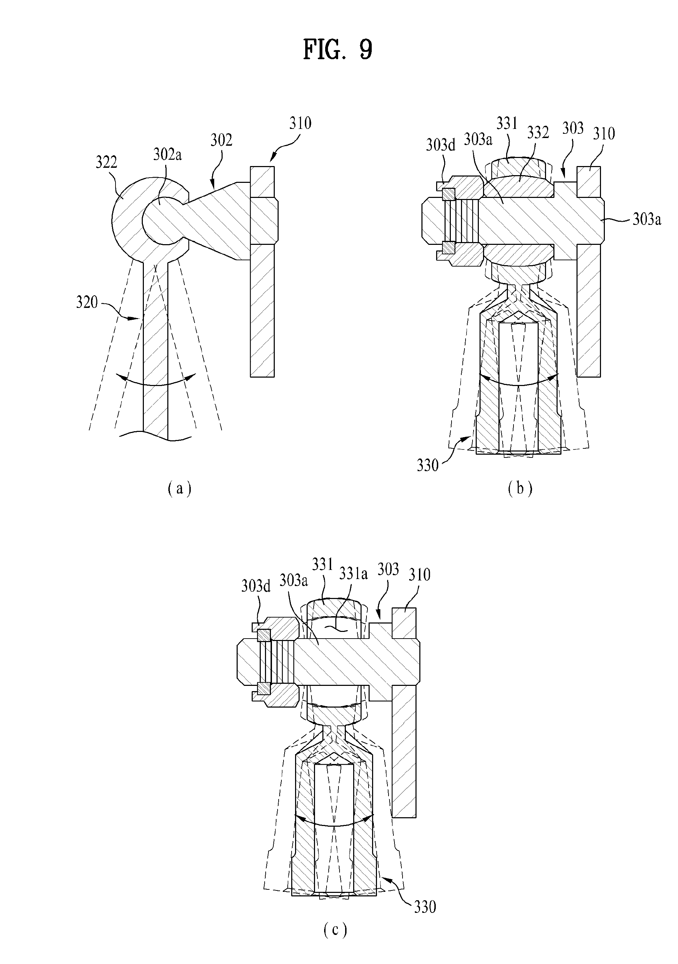

FIG. 9 illustrates the back and front rotational movement of the second connecting member 320 and 330 according to the embodiments shown in FIGS. 6 to 8. Here, a rotational angle along the back and forth direction may be 1° ~ 5°.

FIG. 9(a) illustrates the backward and forward rotation of the second connecting member 320 described in reference to FIG. 6. Here, when the second connecting member 310 is performing the rotation in a state of the head part 302a being inserted and received in the receiving part 322 of the second connecting member 320, the second connecting member 320 may gradually perform the backward and forward rotation with respect to the head part 302a while performing the up and down direction.

FIG. 9(b) illustrates the backward and forward rotation of the second connecting member 330 described in reference to FIG. 7.

Here, when the first connecting member 310 is performing the rotation in a state of the first coupling part 303a being inserted an received in the bearing 332 arranged in the receiving part 331 of the second connecting member 330, the second connecting member 330 may be gradually performing the backward and forward rotation with respect to the bearing 332 while performing the upward and downward rotation.

The bearing 332 may guide the rightward/leftward and backward/forward rotation described above, because it is rotatably provided in the receiving part 331.

FIG. 9(c) illustrates the backward and forward rotation of the second connecting member 330 described in reference to FIG. 8. Here, when the first connecting member 310 is performing the rotation in a state of the first coupling part 303a being inserted and received in the receiving part 331 of the second connecting member 330, the second connecting member may be gradually performing the backward and forward rotation with respect to the bearing 332 while performing the upward and downward rotation.

At this time, the rightward and leftward direction may be performed in predetermined range, because the diameter of the receiving hole 331a provided in the receiving part 331 may be larger than the diameter of the first coupling part 303a.

In other words, when the second connecting member 330 is performing the backward rotation, the backward rotation may be continued until an upper back end and a lower front end of the receiving hole contact with the first coupling part 303a.

Also, when the second connecting member 330 is performing the forward rotation, the forward rotation may be continued until an upper front end and a lower back end of the receiving hole contact with the first coupling part 303a.

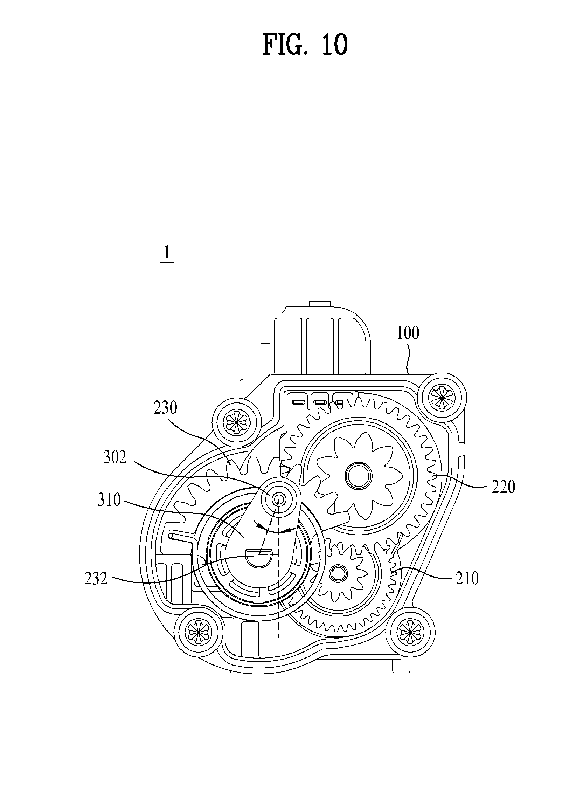

In reference to FIGS. 10 to 11, an arrangement state of the gear assembly will be described.

When installed to the turbocharger, it may be advantageous to a layout with parts adjacent thereto and improvement of productivity to minimize the size of the actuator 1 according to the present invention.

Because of that, it is necessary to minimize the space occupied by the inner component parts of the actuator 1.

For that, rotation axis of the first, second and third gears 210, 220 and 230 provided in the gear assembly 200 may be arranged in the housing unit 100 in a triangle shape

At this time, the first, second and third gears 210, 220 and 230 may be partially overlapped with each other. To enable the gears 210, 220 and 230 to engage with each other with overlapped with each other partially, the first gear 210 and the second gear 220 may be provided in a multi-layered gear type as described above.

The gear assembly 200 according to the present invention may be a 3-joining-gear type (including the first, second and third gears). When the three joining gears are arranged, a reliable size of the teeth form provided in the third gear 230 may be enabled and the rigidity of the third gear 230 may be increased.

If the first, second third gears 210, 220 and 230 are arranged along a horizontal or vertical direction, the size of the housing may be arranged longitudinally along one of those directions. The gears may be arranged as mentioned above, because it may be difficult to realize the minimum size and because it may be disadvantageous in an aspect of the layout.

An arrangement of the gear assembly according to another embodiment will be described in reference to corresponding drawings as follows.

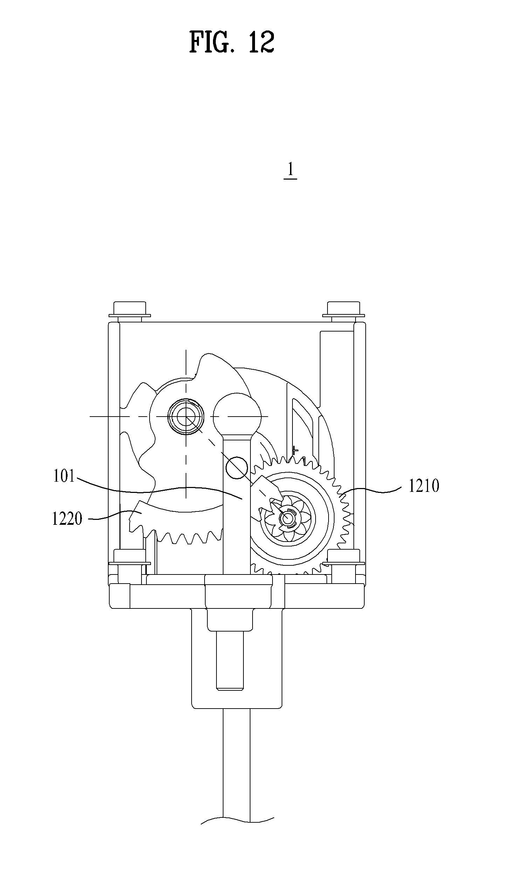

In reference to FIG. 12, if the gear assembly is a 2-joining-gear type including, a first gear 1210 and a second gear 1210 may be arranged along a dotted virtual line drawn at 45 degrees with respect to vertical and horizontal dotted lines drawn passing each center of the first and second gears 1210 and 1210, with being spaced apart a predetermined distance from each other.

If the first and second gears 1210 and 1210 are arranged along a horizontal or vertical direction, not arranged as shown in FIG. 12, the housing unit may be longitudinally arranged along a predetermined direction. Because of that, the gears 1210a and 1210 may be arranged as mentioned above in FIG. 12.

Here, the first and second gears 1210 and 1210 may be partially overlapped with each other. For the partial overlapping, the first gear 210a may be a multi-layered gear.

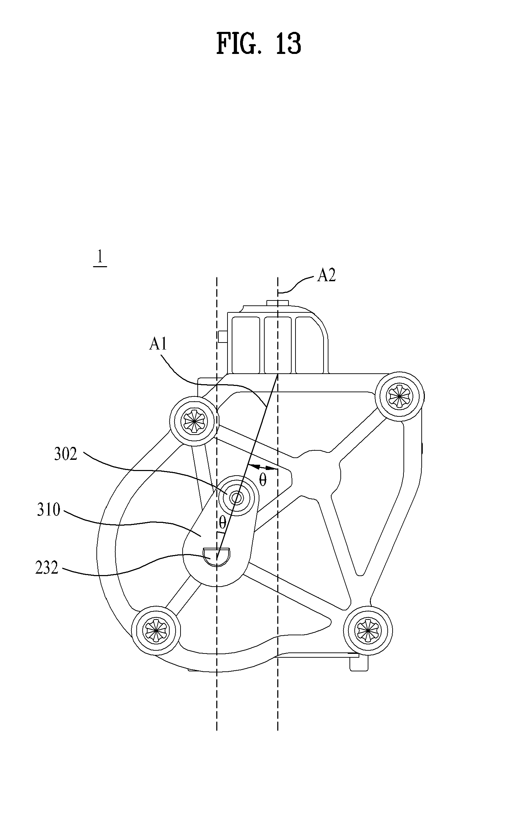

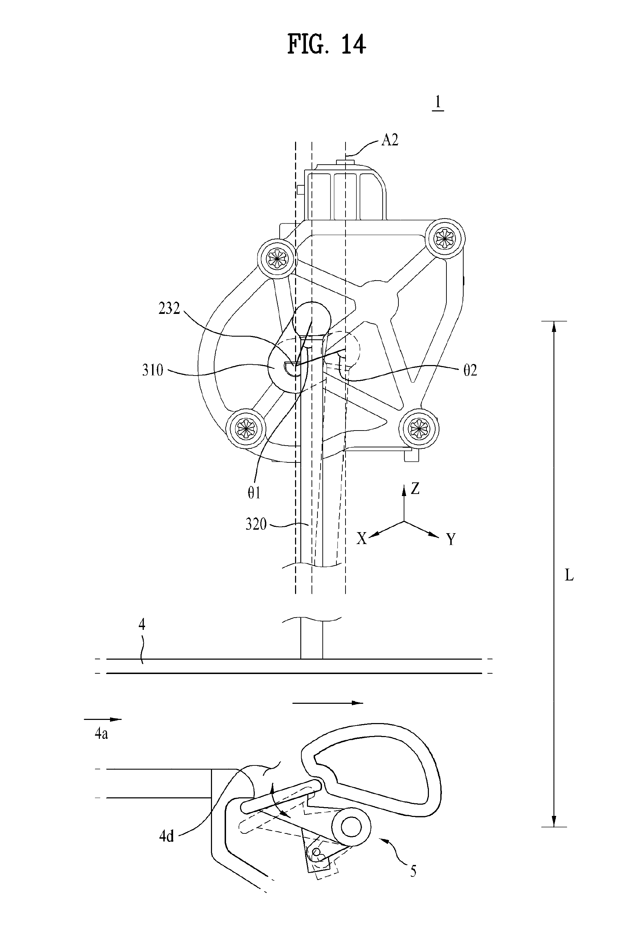

In reference to FIGS. 13 and 14, the relation between an arrangement angle of the first connecting member 310 and the resistance of the valve 5 will be described as follows.

The arrangement angle ($\theta$) may be a slope angle formed between a virtual perpendicular line (A2) and a straight line (A1) connecting the shaft 232 and the center of the intermediate connecting member 302.

According to the arrangement state of the first connecting member 310, the first connecting member 310 may be arranged along a right upward direction with respect to the shaft 232 (in a first quadrant on x-Y coordinates from a center of the shaft as an origin of coordination).

The second connecting member 320(see FIG. 2) may be driven by the driving force of the driving motor (101, see FIG. 2) transferred via the shaft 232, to close or open the valve 5(see FIG. 1).

However, a proper force capable of resisting the pressure of exhaust gas has to be provided to maintain the closed status of the valve 5. To provide the resistance capable of resisting the pressure of exhaust gas, the arrangement angle ($\theta$) has to have a value in an angle range and a large resistance may be provided to the valve 5 via the second connecting member 320 even by a relatively small force.

As shown in FIG. 14, when the exhaust gas is drawn toward the exhaust gas passage 4a, the pressure of exhaust gas may press the valve 5 and the valve 5 may be rotated downwardly to have a tendency to open the bypass passage 4d because of such the pressure of exhaust gas.

As a result, the valve 5 has to be pulled along an opposite direction (an upward direction) to the direction of the pressure applied to the valve 5 by the exhaust gas (a downward direction), to maintain the closed status of the valve 5.

For that, when the shaft 232 applies the rotational force generated by the driving motor (101, see FIG. 2) that is driven along a counter-clockwise direction, the first connecting member 310 may be supplied the rotational force by the shaft 232 along the counter-clockwise direction and it may maintain a predetermined arrangement angle ($\theta 1$).

Also, the second connecting member 320 connected with the first connecting member 310 may be supplied an upward force and the valve 5 connected with the second connecting member 320 also may be supplied an upward force. Because of that, the valve 5 may have a predetermined resistance against the pressure of exhaust gas and it may maintain the closed status.

In the meanwhile, if it is necessary to bypass the exhaust gas partially because the engine RPM is high-loaded, the valve 5 has to be in an open status.

For that, the valve 5 has to move along the same direction as the direction of the pressure applied to the valve from the exhaust gas (the downward direction).

For that, when the shaft 232 transfers the rotational force generated by the driving of the driving motor (101, see FIG. 2) along a clockwise direction, the first connecting member 310 may be supplied the rotational force from the shaft 232 along the clockwise direction and the former arrangement angle ($\theta 1$) of the first connecting member 310 may be changed into another arrangement angle ($\theta 2$) different from the former angle.

Also, the second connecting member 320 connected with the first connecting member 310 may be supplied the downward force and the valve 5 connected with the second connecting member 320 may be supplied the downward force, to be in an open status.

If a torque of the driving motor 102 is referenced to as 'T' and the force applied to the second connecting member 320 is referenced to as 'F' and the length of the second connecting member 320 is referenced to as 'L', the torque (T) of the driving motor 102 = F*L. If the force applied to the valve 5 is referenced to as 'F', a following equation may be established:

$$F = \frac{T}{L \sin\theta} \text{ Gear Ratio}$$

Here, if 'L', 'T' and the gear ratio have the constant condition, the important feature is that $\sin\theta$ may be smaller as the arrangement angle ($\theta$) may be getting smaller.

Here, the gear ratio may be a ratio among the first gear to the third gear.

For example, there will be compared a case of 20 degrees of the arrangement angle with a case of 30 degrees when the length of the second connecting member 320 is 10mm, with the ratio of 20 and the torque of 100Nmm.

If the arrangement angle is 20 degrees, sin20°=0.34 and if the arrangement angle is 30 degrees, sin30°=0.5.

If the arrangement angle is 20 degrees, the resistance of 'F' may be 100*20/(10*0.34) = 588.23N and if it is 30 degrees, 'F' may be 100*20/(10*0.5) = 400N.

As a result, it can be said that a larger resistance may be provided to the valve 5 with a fixed torque, as the arrangement angle is getting smaller.

Also, if the arrangement angle is smaller when a fixed resistance is constantly targeted, the target resistance may be provided even with a smaller torque. The relatively smaller torque means a relatively smaller input voltage or electric current and it means that the electric power used to drive the motor may be saved as much.

The arrangement angle ($\theta$) to maintain the closed status of the valve 5 may have a value of approximately 1° ~ 40°.

The reason why the arrangement angle ($\theta$) has the range mentioned above is that the resistance is increased drastically at the arrangement angle ($\theta$) of 40° or less.

In other words, if the arrangement angle is over 40°, the size of the resistance may be small without big change even by a fixed or constant torque. In contrast, if the arrangement angle is 40° or less, the force may be increased drastically by a fixed or constant torque when the arrangement angle is decreased and a larger resistance may be provided to the valve 5 smoothly. Because of that, the closed status of the valve 5 may be maintained completely.

For example, in case the arrangement angle is 5°, a force of 10N may be applied to the second connecting member 320. In case the arrangement angle is 60° ~ 90° over 40°, a force of 1N may be applied to the second connecting member 320.

It may mean that the driving force to adjust the operational status of the valve stably regardless of the pressure of exhaust gas changed variously by the turbocharger may be provided as the arrangement angle of the second connecting member 320 according to the present invention is getting smaller and smaller.

In contrast, if the arrangement angle is 60° ~ 90°, the force (F) applied to the second connecting member 320 may be 1N and the driving force may be transferred to the second connecting member 320 by a relatively smaller resistant pressure than the pressure of exhaust gas generated while exhausting the exhaust gas. Because of that, the valve 5 may be driven unstably.

As a result, the force capable of resisting the exhaust pressure of the exhaust gas may be increased as the arrangement angle is getting smaller.

As follows, the operation of the present invention will be described.

As shown in FIG. 1, a vehicle including the turbocharger is driving and exhaust gas exhausted from an engine provided in the vehicle may be drawn into the turbocharger.

The exhaust gas may be supplied to the turbine 3 and an opened and closed degree of the valve 5 may be adjusted by the actuator 1.

For example, the valve 5 may be operated in a closed status in a low load region (1600rpm or less) and it may be operated in an open status in middle and high load regions (1600rpm or more).

The driving of the vehicle in the low load region will be described.

As shown in FIG. 1, the actuator according to the present invention may include a control unit 500.

The control unit 500 may transfer a control signal to drive the driving motor 102. Also, the control unit 500 may be connected with the sensor 10 and it may recognize the electromagnetic flux density of the magnet provided in the third gear (230, see FIG. 2), to recognize the position of the third gear 230.

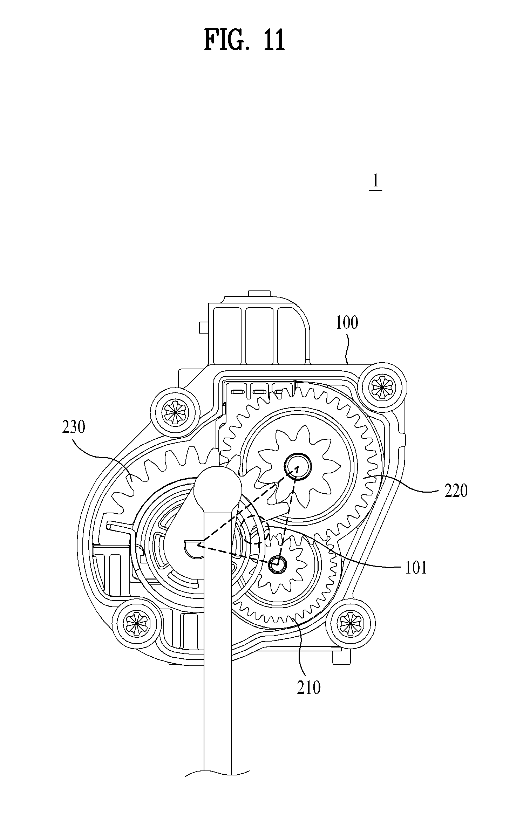

As shown in FIGS. 10 and 11, the driving motor 102 may be supplied the control command input to the control unit 500 and it may drive the motor shaft 101 based on the control command.

The motor shaft 101 may transfer the driving force to the first gear 210 and the first gear 210 may transfer the driving force to the second gear 220 engaging with the first gear 210.

The first and second gears 210 and 220 may be employed as a transmission to increase a torque generated from the driving motor 102.

Once the second gear 220 is rotated along a predetermined direction, the third gear 230 may rotate the first connecting member 310 coupled to the shaft 232 in communication with the rotation of the second gear 220 along a counter-clockwise direction.

A shown in FIG. 14, the first connecting member 310 rotated along the counter-clockwise direction may change the opened/closed status of the valve 5 into a closed status, while pulling the second connecting member 320 and the intermediate connecting member (302, see FIG. 2) connecting the first and second connecting members 310 and 320 with each other upwardly (along Z axis).

The second connecting member 320 may be rotated not only along the up and down direction after supplied the driving force of the third gear (230, see FIG. 10) but also along three directions of Z axis (the up and down direction), X axis (right and left direction) and Y axis (the back and force direction).

For example, the second connecting member 320 may be moved upwardly along Z axis when moving to a closed position. At the same time, the second connecting member 320 may be moved along X and Y axes.

The exhaust pressure of the exhaust gas supplied to the turbocharger may be variable frequently, not fixed constantly.

To operate the valve 5 stably regardless of the exhaust pressure, the larger force (F) than the pressure of the exhaust gas has to be provided to the valve 5 and a minute opened or closed degree of the valve 5 has to be maintained.

For that, the electromagnetic flux density of the magnet may be detected by the sensor 10 when the third gear 230 performs a minute rotation and it may transfer the detected rotation to the control unit 500.

The control unit 500 may be supplied input of different electromagnetic flux density valves based on the rotational status of the third gear 230. The control unit 500 may adjust the opened and closed degree and the arrangement angle of the valve 5 based on the electromagnetic flux density valve.

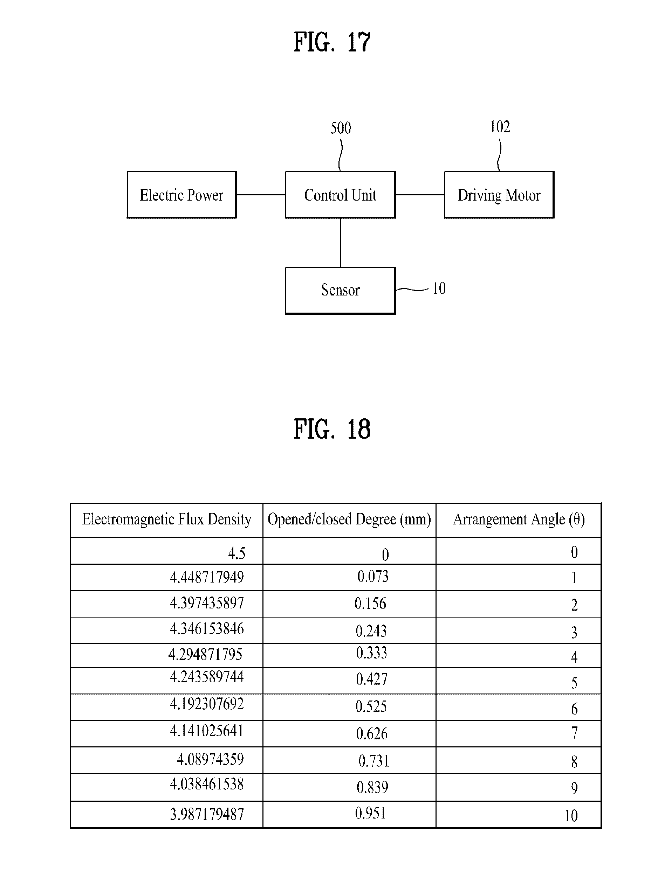

In reference to FIG. 18 accompanied herewith, an opened and closed degree may be 0.73mm and the electromagnetic flux density may be 4.089, if the arrangement angle ($\theta$) is 8°.

Also, if the arrangement angle is decreased by every 1°, the opened and closed degree may be adjusted minutely in proportion.

A stable opened and closed degree may be maintained even when the valve is opened minutely or gradually getting closed from the minute opened status, without being closed completely. At the same time, the proper force (F) may be applied to the second connecting member 320.

In other words, there may be a minute opened and closed degree difference of 0.877mm, when the arrangement angle is 10°(0.073mm of the open and closed degree) and 1°(0.073mm of the open and closed degree). It means that the opened and closed degree may be maintained stably within a preset range, regardless of the pressure of the exhaust gas.

The arrangement angle and the opened and closed degree will be described in reference to corresponding drawings.

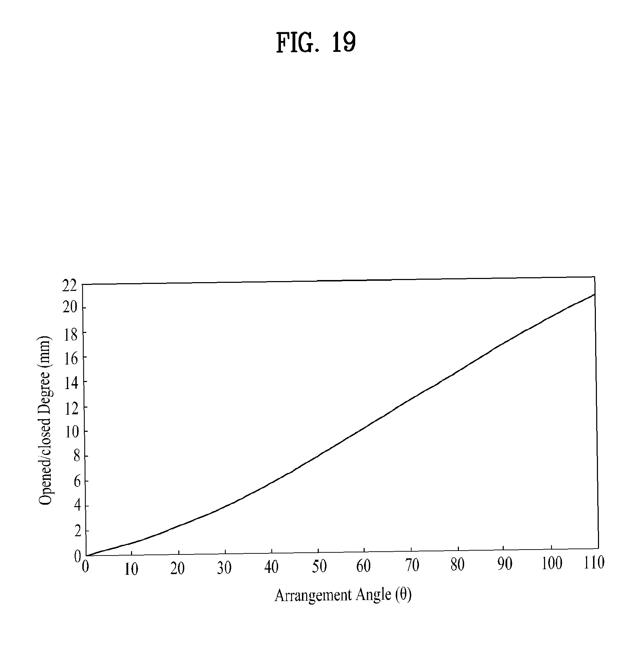

In reference to FIG. 19, the actuator 1 according to the present invention may be operated to adjust the opened and closed degree of the valve 5 minutely based on the arrangement angle when the valve 5 is closed.

When the arrangement angle is 0° and when it is 20°, there may be a minute difference between the opened and closed degrees even with the change of the arrangement angle. The opened and closed degree may be maintained stably, resisting the pressure of the exhaust.

However, the opened and closed degree does not have to be adjusted minutely when the valve is opened, compared with the completely closed status.

When the valve is opened, fresh air may be supplied sufficiently even with a relatively small quantity of the exhaust gas supplied to the turbine and this may not affect the driving of the vehicle.

As a result, when the valve is opened, the opened and closed degree of the valve does not have to be changed minutely like the closed status.

Wherever possible, same reference numbers may be used throughout the drawings to refer to the same or like parts. Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments. Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. An actuator for a vehicle comprising:

   a driving motor comprising a motor shaft;
   a gear assembly comprising a plurality of gears engaging with each other and with the motor shaft; and
   a connecting unit connected with the gear assembly to move along the operation of the gear assembly,
   wherein the connecting unit is connected with a waste gate valve provided in a turbocharger housing.

2. The actuator for the vehicle according to claim 1, further comprising:

   a housing unit to hold the driving motor and the gear assembly;
   a cover member arranged in the housing unit, to cover the gear assembly,
   wherein a shaft provided in one of the gears composing the gear assembly is projected outside passing through the cover member, to be coupled to the connecting unit.

3. The actuator for the vehicle according to claim 2, wherein the connecting unit comprises,

a first connecting member coupled to a shaft of the gear to move along the rotation of the gear;
a second connecting member comprising an end rotatably connected with the first connecting member and the other end connected with the waste gate valve; and
an intermediate connecting member provided between the first connecting member and the second connecting member, to rotatably connect the first and second connecting members with each other.

4. The actuator for the vehicle according to claim 3, wherein the first connecting member comprises,
a shaft hole formed in a non-circular shape, to insert the shaft of the gear therein; and
an inserting hole to fixedly insert the intermediate connecting member therein.

5. The actuator for the vehicle according to claim 3, wherein the intermediate connecting member comprises a ball-joint area coupled to the second connecting member to couple the second connecting member rotatably along a back and forth direction and a right and left direction.

6. The actuator for the vehicle according to claim 3, wherein the intermediate connecting member has a cross sectional diameter that is smaller than a diameter of a coupling hole provided in the second connecting member, to enable the second connecting member to be rotatable along back/forth and right/left directions.

7. The actuator for the vehicle according to claim 2, wherein the gear assembly comprises,
a first gear to engage with a spur gear provided in the motor shaft;
a second gear to engage with the first gear; and
a third gear to engage with the second gear, the third gear comprising a shaft coupled to the connecting unit.

8. The actuator for the vehicle according to claim 7, wherein the first gear, the second gear and the third gear are arranged to enable a virtual line connecting rotational axes of the first gear, the second gear and the third gear to form a triangle.

9. The actuator for the vehicle according to claim 7, wherein the first gear and the second gear are multi-layered gears having different outer diameters, respectively.

10. The actuator for the vehicle according to claim 7, wherein the third gear has a teeth form formed in a predetermined area of an outer circumferential surface thereof, and
a magnet is arranged in the other area having no teeth form, and
a sensor is provided in the housing unit to detect an electromagnetic flux density of the magnet.

11. The actuator for the vehicle according to claim 2, further comprising:

a heat radiator provided in the housing unit to cut off heat transmission performed by exhaust gas.

12. The actuator for the vehicle according to claim 3, further comprising:

a control unit to control the driving motor, wherein the control unit controls a position of the first connecting member to make an arrangement angle of the first connecting member be a preset angle or less with respect to a virtual perpendicular line, to prevent the value from being opened by the pressure of exhaust gas flowing the waste gate, when embodying a closed status of the waste gate by using the valve.

13. The actuator for the vehicle according to claim 12, wherein the control unit controls the arrangement angle of the first connecting member to have a value in a range of $1° \sim 40°$, when the waste gate is closed by the valve.

14. The actuator for the vehicle according to claim 12, wherein a resistance of the valve resisting against the pressure of exhaust gas is increased as an arrangement angle of the first and second connecting members is getting smaller, when a predetermined quantity of electric currents are applied to the driving motor.

15. The actuator for the vehicle according to claim 14, wherein the area of the first connecting member coupled to the shaft of the gear is arranged upper than the area thereof connected with the second connecting member, and
the area of the second connecting member coupled with the first connecting member is arranged upper than the area thereof coupled to the valve.

# FIG. 1

# FIG. 2

EP 2 520 838 A2

# FIG. 3

# FIG. 4

# FIG. 5

# FIG. 6

# FIG. 7

# FIG. 8

# FIG. 9

( a )

( b )

( c )

# FIG. 10

# FIG. 11

EP 2 520 838 A2

# FIG. 12

23

# FIG. 13

# FIG. 14

# FIG. 15

Force (N) vs Arrangement angle (θ)

# FIG. 16

# FIG. 17

| Electric Power | — | Control Unit | — | Driving Motor |

500, 102, Sensor, 10

# FIG. 18

| Electromagnetic Flux Density | Opened/closed Degree (mm) | Arrangement Angle ($\theta$) |
|---|---|---|
| 4.5 | 0 | 0 |
| 4.448717949 | 0.073 | 1 |
| 4.397435897 | 0.156 | 2 |
| 4.346153846 | 0.243 | 3 |
| 4.294871795 | 0.333 | 4 |
| 4.243589744 | 0.427 | 5 |
| 4.192307692 | 0.525 | 6 |
| 4.141025641 | 0.626 | 7 |
| 4.08974359 | 0.731 | 8 |
| 4.038461538 | 0.839 | 9 |
| 3.987179487 | 0.951 | 10 |

FIG. 19